(19) Europäisches Patentamt

European Patent Office

Office européen des brevets

(11) **EP 1 647 907 A1**

(12) **DEMANDE DE BREVET EUROPEEN**

(43) Date de publication:
**19.04.2006 Bulletin 2006/16**

(51) Int Cl.:
*G06F 17/30* (2006.01)

(21) Numéro de dépôt: **05291964.4**

(22) Date de dépôt: **22.09.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **15.10.2004 FR 0410970**

(71) Demandeur: **FRANCE TELECOM 75015 Paris (FR)**

(72) Inventeurs:
• **De Vaulchier du Deschaux, Aloïs 91360 Villemoisson sur Orge (FR)**
• **Maitret, Bénédicte 75017 Paris (FR)**
• **Gruson, Manuel 75014 Paris (FR)**

(74) Mandataire: **Blot, Philippe Robert Emile et al Cabinet Lavoix 2, place d'Estienne d'Orves 75441 Paris Cedex 09 (FR)**

(54) **Procédé et systéme de synchronisation asymétrique de données**

(57) L'invention concerne un procédé de synchronisation asymétrique de champs unitaires ($F_1$, $F_2$) appariés d'une (DB) et d'une autre (ODB) bases de données.

On transmet (A) de la base (DB) vers l'autre base (ODB) la donnée (a') de $F_1$, on applique (B) les règles de transformation (R{f}) à la donnée transmise (a') pour engendrer une valeur (b') apparente pertinente pour l'autre base (ODB), on calcule (C) à partir des règles de transformation (R{f'}), de la valeur (b') une valeur (a") apparente pertinente pour la base (DB) et on soumet (D) la valeur transmise (a') et la valeur apparente pertinente (a") à un test d'identité. Sur réponse positive au test (D) on suspend le processus de synchronisation asymétrique et on affecte ($E_1$) la valeur (b') au champ unitaire $F_2$ de l'autre base (ODB). Sinon, on transmet ($E_2$) de l'autre base (ODB) à la base (DB) la valeur (a") et on met à jour (F) le champ unitaire $F_1$, a'=a".

Application à la présélection téléphonique en téléphonie fixe ou mobile.

FIG.1a

EP 1 647 907 A1

**Description**

L'invention concerne un procédé et un système de synchronisation asymétrique de bases de données.

Avec l'augmentation constante des échanges de données sur les réseaux IP, réseau INTERNET et réseau IP local ou réseau d'entreprise, en raison, notamment, de la multiplication des terminaux de communication tels que téléphone fixe, téléphone mobile, assistant personnel PDA, ordinateur personnel PC ou autres et de la généralisation des communications par transmission de données numériques, l'opération de synchronisation des données échangées est devenue cruciale, aux fins notamment d'assurer l'intégrité du partage des données échangées, et, finalement de l'information échangée supportée par ces dernières.

A l'heure actuelle, les procédés de synchronisation de données permettent de mettre à jour des données, telles que par exemple les contacts d'un carnet d'adresses, entre un terminal et un serveur, ou entre deux terminaux.

De manière plus spécifique, les données sont réparties de façon identique entre les deux entités, ou au moins de façon similaire, les champs de données étant appariés au mieux, un élément de données unitaires étant identique sur chaque entité, lorsque cet élément de données a pu être synchronisé.

A titre illustratif, si un serveur contient des contacts comportant des champs de données « Nom » ; « Téléphone travail », « Téléphone maison », et que le terminal contient des contacts comportant des champs « Name », « Phone Number », l'appariement s'effectue de la façon ci-après :

- Nom ↔ Name
- Téléphone travail ↔ Phone Number
- Téléphone maison

La synchronisation d'un contact donne par exemple, après synchronisation :

- Julien ↔ Julien
- 01 02 03 04 05 ↔ 01 02 03 04 05
- 06 02 03 08 06

Il apparaît ainsi que les données sont donc similaires de part et d'autre sur chaque entité, mais pas strictement identiques. Toutefois un champ qui a été synchronisé contient des données identiques sur chaque entité.

Les processus de synchronisation précités s'appuient sur des protocoles de synchronisation adaptés tels que SyncML® ; Active Sync® ou Hot sync ® par exemple.

Chacun des processus précités SyncML®, Active Sync ® ou Hot sync ® est disponible sur les sites INTERNET respectifs ci-après :

http://www.openmobilealliance.org/tech/affiliates/LicenseAgreement.as p?DocName=/syncml/spec1-0-1.zip;
http://msdn.microsoft.com/library/default.asp?url=/library/en-us/wceactsy/html/ceoriActive-Sync.asp;
http://ipsit.bu.edu/mislab/theses/ska/node11.html.

En outre, des procédés de traitement de données, changement de format par exemple, existent dans l'état de la technique, mais restent soumis à l'une des restrictions ci-après :

- les changements de données sont mis en oeuvre lors des processus imports/exports, mais non lors des synchronisations ;
- les changements de données effectuent des modifications locales de données, telles que par exemple reformatage de tous les numéros, et couplage avec une synchronisation symétrique permettant de disposer de données modifiées.

A titre d'exemple non limitatif, le produit Phone Sync de Openwave, disponible à l'adresse du site INTERNET : http://fonsync.openwave.com/fon/fonesync/home.nsf/(Nodes)/nole4KFM7K28.ht m propose les fonctionnalités ci-après :
« Pour les voyageurs se rendant à l'étranger, Fonesync change et formate automatiquement les codes des pays et les codes internationaux de façon à ce que les voyageurs soient fonctionnels où qu'ils soient ».

Un examen détaillé des opérations exécutées montre qu'il s'agit d'une modification de toutes les données, suivie d'une synchronisation symétrique.

A une question fréquemment posée « Puis-je prendre mes numéros (d'appel) avec moi lorsque je voyage à l'étranger ? » la réponse fournie par les fonctionnalités de Fonesync est la suivante : « si vous sélectionnez le nom du pays dans lequel vous voyagez, Fonesync est en mesure d'ajouter automatiquement les codes d'accès internationaux et les codes nationaux à tous les numéros d'autres pays, si vous le désirez. Lorsque vous retournez dans votre pays d'origine, vous devez simplement changer de sélection du nom du pays, et vos numéros de téléphone sont restitués au format approprié pour appeler à partir de votre pays d'origine ».

Ainsi les processus de l'art antérieur permettent de :

- synchroniser des données personnelles de façon similaire de part et d'autre, sur chaque entité ;
- effectuer des changements systématiques des données, selon des règles définies et préétablies.

Toutefois les processus de l'art antérieur ne couvrent aucunement les fonctionnalités ci-après :

- dans certaines circonstances d'utilisation, une synchronisation asymétrique peut être souhaitable, afin d'obtenir des données qui soient différentes de part et d'autre, sur chaque base de données, mais répondant à des règles strictes de dissymétrie. En d'autres termes, la notion de synchronisation asymétrique recouvre un processus de synchronisation non symétrique de données dans lequel l'absence de symétrie est définie par des règles strictes.
- A titre d'exemple, une telle utilisation peut correspondre à celui d'un utilisateur qui souhaite que tous ses numéros de téléphone commencent par le chiffre 4 sur son combiné téléphonique fixe mais commencent par le chiffre 0 sur son terminal de téléphonie mobile, en vue d'effectuer une présélection.

Un autre exemple d'une telle utilisation peut correspondre à celui d'un utilisateur souhaitant synchroniser des rendez-vous ou des contacts de son agenda sur son terminal PC avec un assistant électronique PDA qui ne supporte pas les caractères accentués, cet utilisateur désirant néanmoins que les caractères accentués restent effectivement accentués sur son terminal PC.

Dans ce contexte, un objet de la présente invention est de proposer un procédé et un dispositif permettant d'effectuer une synchronisation asymétrique entre deux bases de données, selon des règles de définition de l'asymétrie introduite, grâce à l'utilisation de processus de synchronisation symétrique.

Le procédé de synchronisation asymétrique de données contenues dans deux champs unitaires d'une base de données respectivement d'une autre base de données, objet de la présente invention, les deux champs unitaires ayant été préalablement appariés, est remarquable en ce qu'il consiste au moins à transmettre de la base de données vers cette autre base de données la valeur de la donnée contenue dans le champ unitaire de cette base de données, et, au niveau de cette autre base de données, appliquer un ensemble de règles de transformation à la valeur de la donnée transmise, pour engendrer à partir de la valeur de la donnée transmise, de la valeur contenue dans le champ unitaire apparié de l'autre base de données et de cet ensemble de règles une valeur apparente pertinente pour cette autre base de données, calculer à partir de l'ensemble de règles de transformation, de la valeur de la donnée transmise et de cette valeur apparente pertinente pour cette autre base de données une valeur apparente pertinente pour cette base de données, soumettre à un test de vérification d'identité la valeur de la donnée transmise et la valeur apparente pertinente pour cette base de données. Sur réponse positive au test de vérification d'identité, on suspend le processus de synchronisation asymétrique et on affecte au champ unitaire de l'autre base de données la valeur apparente pertinente pour cette autre base de données, les données contenues dans les deux champs unitaires respectifs étant synchronisées asymétriquement. Au contraire, sur réponse négative au test d'identité on transmet de l'autre base de données à cette base de données la valeur apparente pertinente pour cette base de données.

Au niveau de cette base de données, on met à jour le champ unitaire de cette base de données à partir de la valeur apparente pertinente pour cette base de données, les données contenues dans les deux champs unitaires respectifs étant synchronisées asymétriquement.

Le système de base de données, objet de la présente invention, comporte au moins une base de données et une unité de calcul et de mémorisation de données, cette unité de calcul comportant au moins une fonction d'appariement d'un champ de données unitaire interne à cette base de données avec un champ de données unitaire externe à cette base de données hébergé par une unité informatique.

Il est remarquable en ce qu'il comporte en outre un ensemble de règles de transformation de données numériques, mémorisé en mémoire permanente des moyens de mémorisation de données.

L'unité de calcul comporte, sur réception de la donnée contenue dans le champ unitaire de données externe à cette base de données, un module de calcul exécutable permettant d'appliquer cet ensemble de règles de transformation à la valeur de la donnée transmise, pour engendrer à partir de la valeur de la donnée transmise, de la valeur contenue dans le champ unitaire apparié de cette base de données et de cet ensemble de règles une valeur apparente pertinente pour cette base de données, un module de calcul exécutable permettant de calculer à partir de l'ensemble de règles de transformation, de la valeur de la donnée transmise et de la valeur apparente pertinente pour cette base de données une valeur apparente pertinente pour ce champ unitaire externe à cette base de données, un module exécutable de vérification d'identité de la valeur de la donnée transmise et de la valeur apparente pertinente pour ce champ unitaire externe à cette base de données.

Sur réponse positive, du module exécutable de vérification d'identité, cette unité de calcul comporte un module exécutable d'arrêt du processus de synchronisation asymétrique et d'affectation, au champ unitaire interne à cette base de données, de la valeur apparente pertinente pour cette base de données, les données contenues dans les deux champs unitaires respectifs étant synchronisées asymétriquement.

Le procédé de synchronisation asymétrique de champs de données unitaire et le système de base de données, objets de l'invention, trouvent application à la gestion de l'échange de données entre bases de données de tout type, en particulier de bases de données du type PDA (Personal Digital Assistant), PC (Personal Computer), ordinateur portable, terminal de téléphonie mobile, serveur dédié ou autre.

Ils seront mieux compris à la lecture de la description et à l'observation des dessins ci-après dans lesquels :

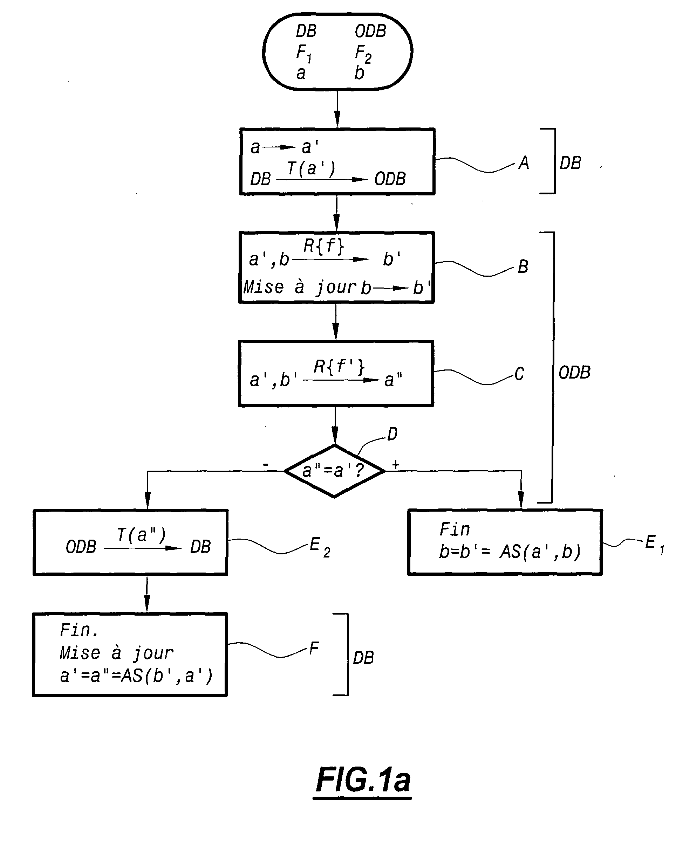

- la figure 1a représente, à titre illustratif, un organigramme des étapes essentielles de mise en oeuvre du procédé de synchronisation asymétrique de données, objet de la présente invention, lorsque les données à synchroniser asymétriquement sont contenues dans deux entités informatiques présentant une architecture de type client-serveur ;
- la figure 1 b représente, à titre illustratif, un détail de mise en oeuvre du procédé objet de l'invention représenté en figure 1 a, lorsque les données à synchroniser asymétriquement sont contenues dans deux entités informatiques distinctes présentant une architecture de type client-serveur, une modification locale des données à synchroniser intervenant au niveau du serveur ;
- les figures 2a à 2d illustrent un protocole d'échange de messages pour la mise en oeuvre du procédé de synchronisation asymétrique de données objet de l'invention, lorsqu'une modification locale des données à synchroniser asymétriquement intervient au niveau du terminal client ;
- les figures 3a à 3d illustrent un protocole d'échange de messages pour la mise en oeuvre du procédé de synchronisation asymétrique de données objet de l'invention, lorsqu'une modification locale des données à synchroniser asymétriquement intervient au niveau du serveur ;
- la figure 4 représente, à titre illustratif, sous forme de blocs fonctionnels, l'architecture d'un système de base de données, jouant le rôle d'un serveur, pour la mise en oeuvre du procédé objet de l'invention, vis-à-vis d'un terminal client par exemple.

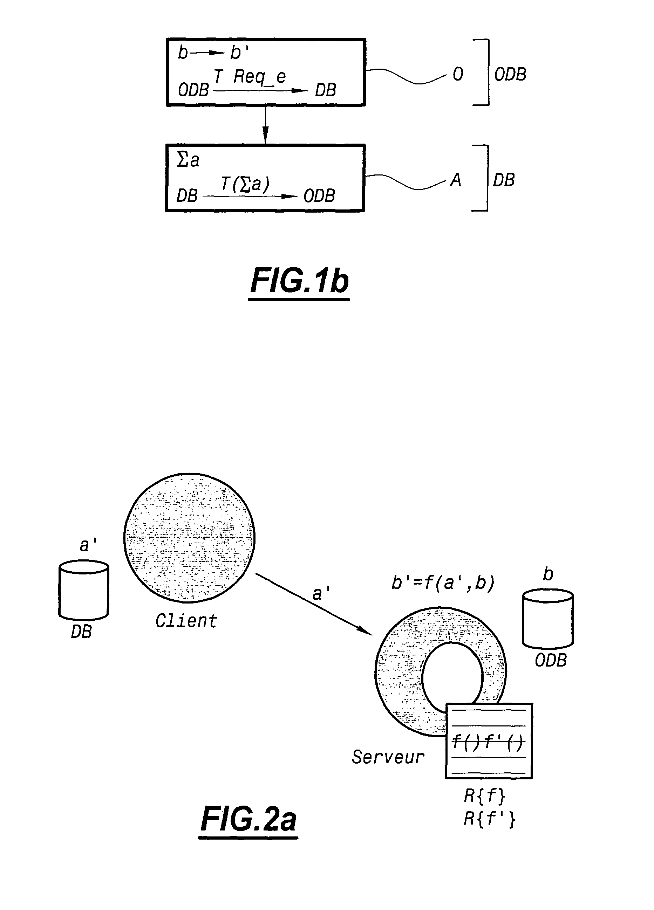

Une description plus détaillée du procédé de synchronisation asymétrique de données objet de la présente invention sera maintenant donnée en liaison avec les figures 1 a et 1 b.

D'une manière générale, on indique que le procédé objet de l'invention est mis en oeuvre entre une base de données DB, première base de données, et une autre base de données ODB, deuxième base de données, constituées par des entités informatiques distinctes, les unités informatiques, la base de données et l'autre base de données, étant configurées selon une architecture de type client-serveur, la base de données DB pouvant être constituée par la base de données de tout terminal client tel qu'un PDA, un ordinateur portable ou fixe, une station de travail ou autre et l'autre base de données ODB étant, à titre d'exemple, considérée comme constituée par un serveur.

D'une manière plus spécifique on indique que la base de données DB peut être constituée par au moins un fichier contenant des données à accès séquentiel en écriture lecture, ce fichier étant constitué de champs unitaires, et l'autre base de données ODB est constituée par un serveur capable de gérer des protocoles d'interaction entre le terminal client et le serveur précité. L'autre base de données ODB comporte également des fichiers à accès séquentiels. L'autre base de donnés ODB peut également être simplement constituée par au moins un fichier contenant des données à accès séquentiel en écriture lecture. Le procédé de synchronisation asymétrique, objet de l'invention, peut ainsi être mis en oeuvre entre deux terminaux, tels que des terminaux mobiles par exemple.

Les données à synchroniser de manière asymétrique conformément au procédé objet de l'invention sont contenues dans deux champs unitaires, un champ $F_1$ de la base de données DB et un champ $F_2$ de l'autre base de données ODB. Les données de départ les champs unitaires $F_1$ et $F_2$ sont désignés <u>a</u> respectivement <u>b</u> ainsi que représenté sur la figure 1a.

Conformément à un aspect spécifique de la mise en oeuvre du procédé de synchronisation asymétrique de données, objet de la présente invention, on considère a priori que les champs unitaires $F_1$ et $F_2$ ont été appariés ainsi que décrit précédemment dans la description, grâce à la mise en oeuvre de processus d'appariement préalables à toute synchronisation de champ de données et en particulier de champs unitaires précédemment cités.

On considère à titre d'exemple que les champs unitaires $F_1$ et $F_2$ comportent respectivement les données a et b et que, à titre d'exemple non limitatif, une modification locale des données du champ unitaire $F_1$ intervient, la donnée a étant transformée en une donnée a' par exemple, suite à une action de l'utilisateur du terminal client.

Dans cette situation, ainsi que représenté en figure 1 a, le procédé de synchronisation asymétrique de données objet de l'invention consiste en une étape A, au niveau de la base de données DB, à transmettre de la base de données DB vers l'autre base de données ODB la valeur de la donnée contenue dans le champ unitaire, c'est-à-dire la donnée a' suite à la modification, donnée contenue dans la base de données DB et dans le champ unitaire $F_1$ de celle-ci.

L'opération précitée est notée :

$$DB \xrightarrow{\quad T(a') \quad} ODB$$

Suite à la réception de la donnée modifiée a' du champ unitaire $F_1$ le procédé objet de l'invention consiste au niveau de l'autre base de données ODB, en une étape B, à appliquer un ensemble de règles de transformation à la valeur de la donnée transmise.

A l'étape B de la figure 1 a cette opération est notée

$$a', b \xrightarrow{\quad R\{f\} \quad} b'$$

L'opération réalisée à l'étape B permet d'engendrer à partir de la valeur de la donnée transmise, la valeur a', de la valeur contenue dans le champ unitaire $F_2$ de l'autre base de données ODB, c'est-à-dire la valeur b de départ, et de l'ensemble de règles R {f}, d'obtenir une valeur apparente pertinente pour l'autre base de données ODB, cette valeur étant notée b'.

L'étape B peut également alors consister en une opération de mise à jour de la valeur du champ unitaire $F_2$ de l'autre base de données ODB par la relation

$b \rightarrow b'$

La relation précédente indique une relation d'affectation de la valeur b' à la valeur b du champ unitaire $F_2$ de l'autre base de données ODB.

L'opération précitée peut être provisoire, ainsi qu'il sera décrit ci-après.

En effet, en référence à la figure 1 a, le procédé objet de l'invention consiste au niveau de l'autre base de données ODB, à exécuter une étape C consistant à calculer à partir de l'ensemble de règles R{f}, de la valeur de la donnée transmise a' et de la valeur apparente pertinente pour l'autre base de données ODB une valeur apparente pertinente pour la base de données DB.

A l'étape C de la figure 1 a, cette opération est représentée par la relation

$$a', b' \xrightarrow{\quad R\{f\} \quad} a''$$

La valeur a'' représente la valeur apparente pertinente pour la base de données DB.

Le procédé de synchronisation asymétrique de données, objet de l'invention, consiste alors à exécuter une étape D consistant à soumettre à un test de vérification d'identité, la valeur de la donnée transmise, c'est-à-dire la valeur a', et la valeur apparente pertinente pour la base de données DB, c'est-à-dire la valeur a''.

A l'étape D de la figure 1a, cette opération est symbolisée par la relation

$a''=a'$?

Sur réponse positive au test réalisé à l'étape D précité, le test de vérification d'identité de la donnée transmise et de la valeur apparente pertinente pour la base de données DB, le procédé de synchronisation asymétrique, objet de la présente invention, consiste alors à suspendre le processus de synchronisation asymétrique en une étape $E_1$ et à affecter au champ unitaire de l'autre base de données, ODB, c'est-à-dire au champ unitaire $F_2$, la valeur apparente pertinente pour l'autre base de données, soit la valeur b'.

Cette opération est notée à l'étape $E_1$

$$b = b' = AS (a', b)$$

Les données contenues dans les deux champs unitaires respectifs $F_1$ et $F_2$, sont alors synchronisées asymétriquement, conformément au procédé objet de la présente invention.

Au contraire, sur réponse négative au test réalisé à l'étape D, le procédé de synchronisation asymétrique de données objet de l'invention consiste, en une étape $E_2$, à transmettre de l'autre base de données ODB vers la base de données DB la valeur apparente pertinente pour cette base de données DB, c'est-à-dire la valeur a" calculée à l'étape C. Cette opération est représentée par la relation

$$ODB \xrightarrow{\ T(a")\ } DB$$

à l'étape $E_2$ de la figure 1 a.

Le procédé de synchronisation asymétrique objet de l'invention consiste ensuite, au niveau de la base de données DB, à exécuter une étape F consistant à mettre à jour le champ unitaire $F_1$ de la base de données DB, à partir de la valeur apparente pertinente pour cette base de données, c'est-à-dire, à partir de la valeur a" transmise à l'étape $E_2$.

Cette opération est représentée par la relation

$$a' = a" = AS\ (b',\ a')$$

à l'étape F de la figure 1a.

Dans ces conditions, les champs unitaires respectifs $F_1$ et $F_2$ sont synchronisés asymétriquement, la donnée modifiée localement a' au niveau de la base de donnée DB ayant été modifiée en la donnée a", sous le contrôle de l'autre base de données ODB, c'est-à-dire, du serveur.

De préférence, ainsi que représenté à la figure 1 a, on indique que l'étape A consistant à transmettre la valeur a' du champ unitaire $F_1$ de la base de données DB vers l'autre base de données ODB est exécutée automatiquement sur modification locale de la donnée contenue dans le champ unitaire $F_1$ de la base de données DB précitée.

Le mode de mise en oeuvre du procédé de synchronisation asymétrique objet de la présente invention, tel que décrit en liaison avec la figure 1 a, n'est bien entendu pas limité au cas décrit à titre d'exemple d'une modification locale de la valeur de la donnée du champ unitaire $F_1$ de la base de données DB.

En référence à la figure 1 b, le procédé de synchronisation asymétrique objet de la présente invention peut en outre être mis en oeuvre dans le cas d'une modification locale de la valeur de la donnée contenue dans le champ unitaire $F_2$ de l'autre base de donnée ODB.

Dans cette situation, le procédé objet de l'invention consiste au moins, préalablement à l'étape A consistant à transmettre de la base de données DB vers l'autre base de données ODB, à effectuer en une étape O une étape de transmission préalable de l'autre base de données ODB, c'est-à-dire du serveur, vers la base de données DB du terminal client, une requête d'appel de transmission des données contenues dans la base de données DB du terminal client.

L'étape précitée peut être effectuée selon la transmission précédemment décrite à l'étape A de la figure 1a.

Dans cette situation, seul le champ unitaire $F_1$ apparié de la base de données DB peut être transmis.

Toutefois, dans un mode de mise en oeuvre préférentiel non limitatif, on indique que, alors que la donnée du champ unitaire $F_2$ a été modifiée côté serveur, ce dernier peut de manière avantageuse, forcer une synchronisation lente ayant pour objet d'assurer une synchronisation de type classique entre la totalité des données du terminal client et de la base de données DB de ce dernier. Cette synchronisation lente peut être mise en oeuvre par tout processus de synchronisation lente de type classique tel que Activesync® Hotsync®, ou autre par exemple. On rappelle que dans ce type de synchronisation, le terminal client reçoit la demande de transmettre l'intégralité de ses données au serveur, c'est-à-dire à l'autre base de données ODB.

Sur la figure 1b, les opérations de transmission d'une requête d'appel de transmission sont notées selon la relation

$$ODB \xrightarrow{\ T\ Req\_e\ } DB$$

cette opération intervenant par exemple, sur modification locale de la valeur de la donnée b du champ unitaire $F_2$, en la valeur b' selon la relation $b \to b'$.

L'opération de synchronisation selon la synchronisation lente est représentée à l'étape A de la figure 1 b analogue à l'étape A de la figure 1 a par la transmission de la totalité des données du terminal client totalité des données notée $\Sigma a$ selon la relation

$$DB \xrightarrow{T(\Sigma a)} ODB \ .$$

Le protocole d'échange de messages entre le terminal client, c'est-à-dire la base de données DB, et le serveur, c'est-à-dire l'autre base de données ODB, est maintenant décrit en liaison avec les figures 2a à 2d.

Sur la figure 2a on a représenté la transmission de la valeur a' modifiée localement au niveau de la base de données DB par le terminal client et l'application de l'ensemble de règles sous la forme d'une fonction f à la valeur transmise a' et à la valeur b de départ contenue dans le champ unitaire $F_2$ de l'autre base de données ODB. L'ensemble des règles, conformément à un aspect remarquable du procédé de synchronisation asymétrique objet de l'invention, est réputé consister en un ensemble de couple de fonctions, chaque couple étant noté {f,f'}. Chaque couple comporte au moins une première fonction de calcul de la valeur apparente pertinente b' pour l'autre base de données ODB et une deuxième fonction f de calcul de la valeur apparente pertinente pour la base de données DB.

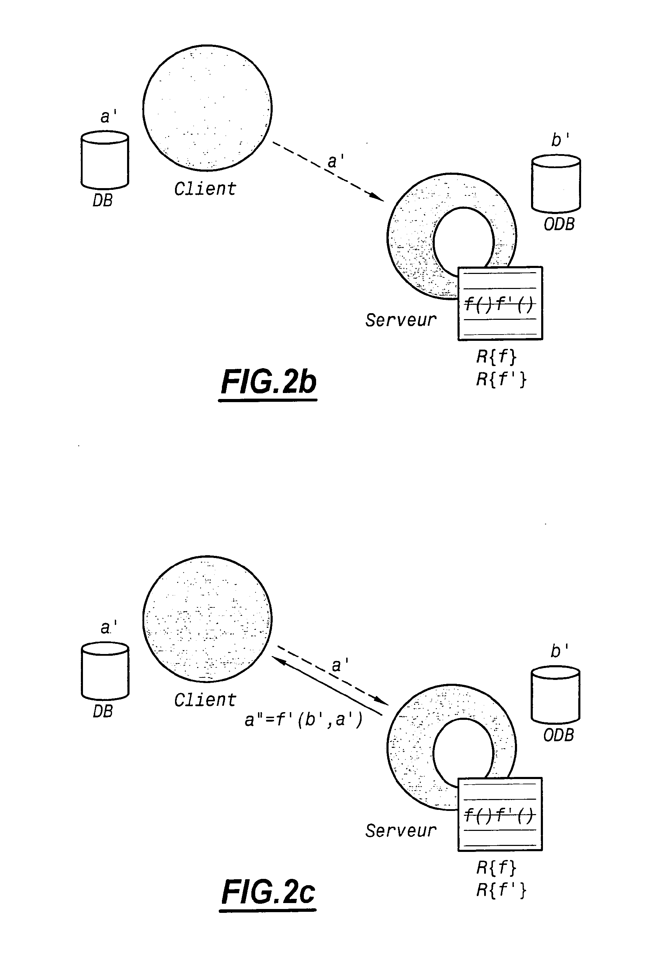

Sur la figure 2b on a représenté l'affectation de la valeur b' valeur apparente pertinente pour l'autre base de données ODB, lorsque, sur réponse positive au test D de la figure 1 a, l'étape $E_1$ est appelée.

Sur la figure 2c on a représenté au contraire, sur réponse négative au test D de l'étape précitée, le calcul de la valeur apparente pertinente pour la base de données DB à partir de la deuxième fonction f et la transmission de cette valeur apparente pertinente à la base de données DB c'est-à-dire la transmission de la valeur a" à l'étape $E_2$ de la figure 1a.

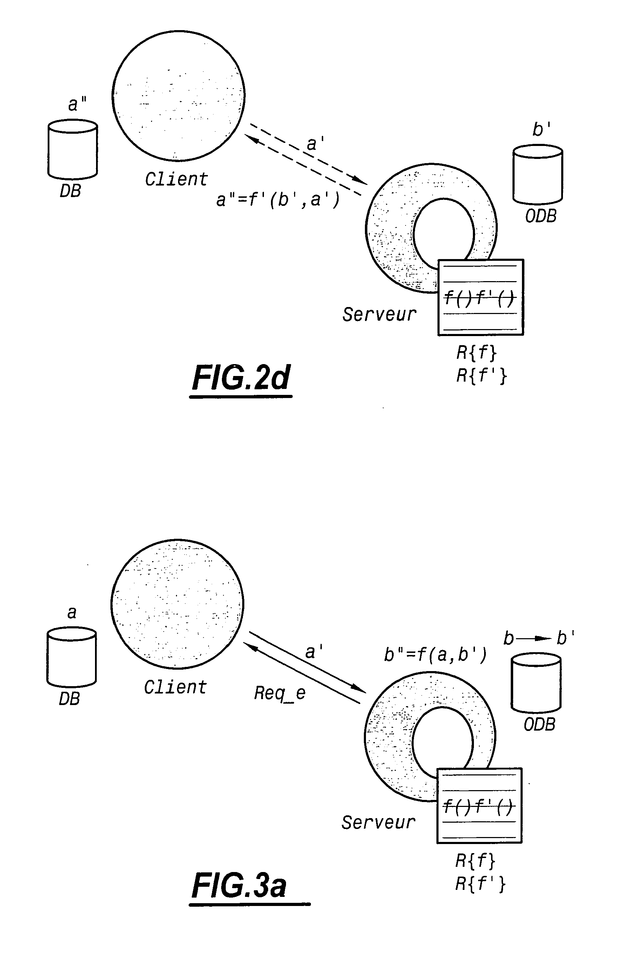

En outre sur la figure 2d, on a représenté l'étape d'affectation de la valeur apparente pertinente pour la base de données DB au champ unitaire $F_1$ de celle-ci selon la relation donnée à l'étape F de la figure 1 a :

$$a' = a'' = AS(b', a').$$

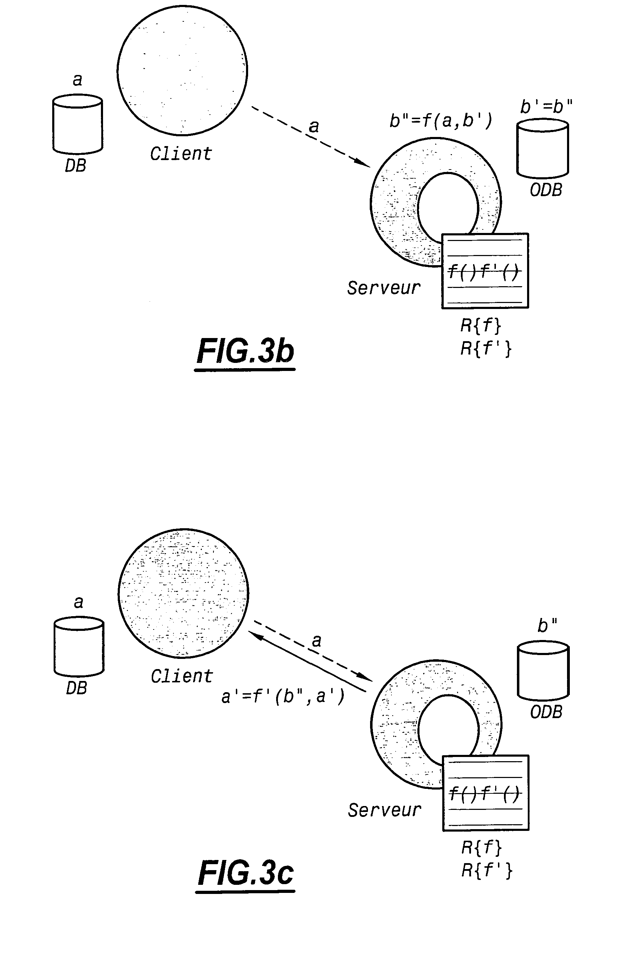

Sur les figures 3a à 3b on a représenté la mise en oeuvre du procédé de synchronisation asymétrique de données, objet de la présente invention, dans le cas où une modification locale intervient au niveau du serveur, c'est-à-dire de l'autre base de données ODB.

Sur modification de la valeur de départ du champ unitaire $F_2$ modification notée $b \rightarrow b'$ le procédé selon l'invention consiste à exécuter l'étape O de la figure 1b c'est-à-dire transmission de la requête Req_e vers le terminal client et bien entendu la base de données DB. L'opération de transmission de la requête précitée est suivie de la transmission par le terminal client soit de la donnée contenue dans le champ unitaire $F_1$ soit de la totalité des données notée $\Sigma$a sur la figure 3a.

Sur réception des données et en particulier de la valeur de la donnée du champ unitaire $F_1$ du terminal client par le serveur, c'est-à-dire par l'autre base de données ODB, l'étape A de la figure 1 a est alors exécutée pour effectuer le calcul de la valeur apparente pertinente pour l'autre base de données ODB, cette opération portant maintenant sur la valeur de la donnée a du champ unitaire $F_1$ et la valeur b' de la donnée du champ unitaire $F_2$ auquel la fonction f est appliquée selon la relation

$$b'' = f(a, b')$$

Le procédé de synchronisation asymétrique, objet de l'invention, est alors poursuivi par les étapes successives de la figure 1 a, appliquées successivement pour exécuter l'affectation à la valeur b' du champ unitaire $F_2$ de la valeur b" par la relation
$b' = b''$ représenté en figure 3b.

Le procédé de synchronisation asymétrique objet de la présente invention est alors suivi en figure 3c du calcul et de la transmission, à partir de la deuxième fonction f de calcul, de la valeur apparente pertinente pour la base de données DB à partir des valeurs du champ unitaire $F_2$ valeur b", et du champ unitaire $F_1$, valeur a, selon la relation :

$$a' = f'(b'', a)$$

Dans la relation précédente a' désigne maintenant la valeur apparente pertinente pour la base de données DB transmise à cette dernière.

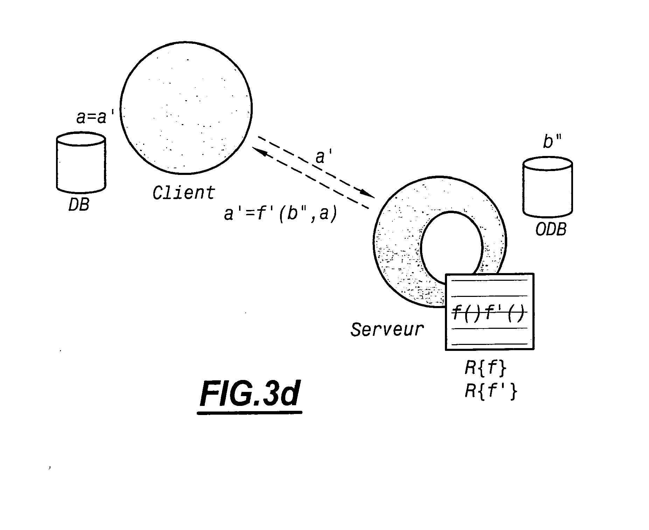

Sur la figure 3d on a représenté l'affectation à la valeur a inchangée au départ de la valeur de la donnée du

champ unitaire $F_1$ de la base de données DB, de la valeur a' précitée selon la relation a = a'.

Bien entendu l'ensemble de règles R précité comporte la première et la deuxième fonctions de calcul f et f constitutives de chaque couple de fonction, une pluralité de couples de fonction pouvant bien entendu être prévue, afin d'assurer la synchronisation asymétrique de données dans des applications diverses.

Toutefois, selon un aspect remarquable du procédé de synchronisation asymétrique objet de l'invention, on indique qu'à chaque couple de fonctions précité est associé un jeu de contraintes de stabilité, appliqué à la première et à la deuxième fonction, ceci afin de permettre de garantir un nombre maximum d'échange de synchronisations, c'est-à-dire de messages de synchronisation entre la base de données DB et l'autre base de données ODB, indépendamment de l'occurrence de la modification locale de chaque champ unitaire sur la base de données DB ou sur l'autre base de données ODB.

Le jeu de contraintes de stabilité permet, conformément à un aspect remarquable du procédé objet de l'invention, d'éviter les boucles de synchronisation.

Ainsi, lorsqu'une synchronisation asymétrique a eu lieu, l'état final est le suivant :

$$B = f(a,b) \; et \; A = f'(f(a,b)a).$$

Les contraintes de stabilité s'écrivent alors :

$$f(A,B) = B \; et \; f'(B,A) = A.$$

Les contraintes de stabilité précitées traduisent de manière mathématique et logique le fait qu'une modification faite sur le terminal client ou sur le serveur, indépendamment de l'occurrence de cette modification sur l'un des deux, ne donne lieu à plus de deux échanges de synchronisation, le système final étant stable.

Ainsi, pour une première fonction f et une deuxième fonction f constituant un couple de fonctions le jeu de contraintes vérifie la relation :

$$f(f'(f(a,b),a),f(a,b)) = f(a,b)$$

$$f'(f(a,b),f'(f(a,b),a)) = f'(f(a,b),a).$$

Dans la relation précédente a et b désignent toute valeur numérique contenue dans le champ unitaire de la base de données DB respectivement dans le champ unitaire de l'autre base de données ODB. Par la notion toute valeur numérique, l'on comprend que a et b désignent toute valeur d'un type donné, numérique, alpha numérique, textuel, objet, etc... Les types sont le plus souvent homogènes dans un mode de mise en oeuvre donné, ce caractère d'homogénéité n'étant pas obligatoire. A titre d'exemple, un numéro de téléphone peut être parfois un texte, parfois un objet numérique séparant code pays et numéro, les deux pouvant coexister.

En outre f(a,b) désigne la valeur apparente pertinente pour l'autre base de données ODB ; f'(f(a,b),a) désigne la valeur apparente pertinente pour la base de données DB, dans les conditions décrites précédemment en liaison avec les figures 2a à 2d respectivement 3a à 3d.

Une description plus détaillée d'une mise en oeuvre du procédé de synchronisation asymétrique objet de la présente invention pour exécuter une application à une adaptation des numéros d'appel téléphonique à la présélection téléphonique sera maintenant donnée ci-après.

On considère, en premier lieu, la valeur apparente pertinente pour l'autre base de données ODB c'est-à-dire la valeur f(a,b).

Si b=∅, aucun numéro de présélection n'ayant encore été attribué au terminal client, alors f(a, 0)=a, 0 désignant l'ensemble vide.

Sinon, si b est différent de 0 alors f(a,b) égal le premier numéro de a, tous les autres numéros de b.

Pour ce qui concerne la valeur apparente pertinente pour la base de données DB valeur f'(b,a) celle-ci est donnée par les relations :

Si a=∅, alors f'(b,∅)=0 0 désignant le chiffre 0 et les numéros suivants de b sauf le premier ;

Sinon, si a est différent de $\varnothing$ alors f'(b,a) = 0 et les numéros suivants de b.

Les règles précitées permettent de garantir, d'une part, l'existence du chiffre 0 au début des numéros de la base de données, c'est-à-dire du terminal client, lequel est alors constitué par un terminal de téléphonie mobile par exemple, cette condition étant assurée par la valeur apparente pertinente pour la base de données DB calculée à partir de la deuxième fonction f, et, d'autre part, le choix par le client utilisateur du premier chiffre, premier numéro de l'autre base de données ODB, la valeur apparente pertinente pour l'autre base de données ODB calculée à partir de la première fonction f.

Un exemple concret d'application est donné ci-après dans le cas de la synchronisation asymétrique entre la base de données d'un téléphone fixe, constituant l'autre base de données ODB, et celle d'un téléphone mobile, constituant la base de données DB.

Dans cet exemple, un même contact, abonné appelé, est représenté par le numéro de téléphone "0712345678" dans le téléphone fixe, autre base de données ODB, et par le numéro de téléphone "0112345678" dans le téléphone mobile, base de données DB.

En conséquence, a = 012345678 et b = 0712345678.

L'utilisateur change le numéro du contact sur son téléphone mobile, base de données DB, et remplace a par a' = 0812345679, figure 2a. La valeur a' est envoyée de la base de données DB à l'autre base de données ODB et la valeur b' = f(a',b) est calculée, figure 2b. La fonction f dans l'exemple donné reflète la règle selon laquelle, sur le téléphone fixe, autre base de données ODB, tous les numéros commencent par 07. En conséquence, b' = 0712345679 et la valeur b est mise à jour et prend la valeur b' dans l'autre base de données ODB, figure 2b. La valeur a" = f(a',b') est calculée, figure 2c. Dans l'exemple donné, la fonction f reflète la règle selon laquelle sur le téléphone mobile, base de données DB, tous les numéros commencent par 01.

En conséquence, a" = 0112345679. Une comparaison entre les valeurs a' et a" est exécutée. Si a' était égal à ", le processus de synchronisation asymétrique s'arrêterait. Dans l'exemple donné, a' est différent de a". La valeur a" est donc transmise à la base de données DB et la mise à jour est effectuée, a' prend la valeur a".

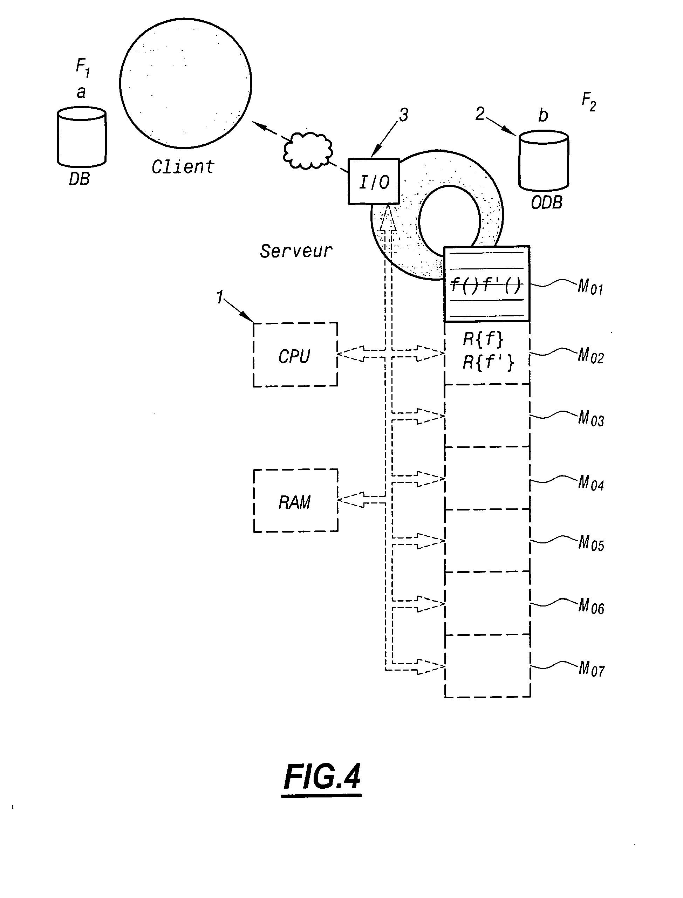

Une description plus détaillée d'un système de base de données conforme à l'objet de la présente invention et permettant la mise en oeuvre du procédé de synchronisation asymétrique de données décrit précédemment sera maintenant donnée en liaison avec la figure 4.

Le système de base de données décrit à la figure 4 correspond à l'autre base de données ODB décrite en liaison avec les figures 1 a, 1 b et 2a à 2d et 3a à 3d pour une mise en oeuvre préférentielle non limitative du procédé de synchronisation asymétrique objet de la présente invention.

En particulier, on indique que la base de données ODB représentée en figure 4 comporte un champ unitaire $F_2$, apparié avec un champ unitaire $F_1$, la base de données ODB comportant au moins une fonction d'appariement d'un champ de données unitaire, le champ $F_2$ interne, à cette base de données avec un champ de données unitaire le champ $F_1$ externe, à la base de données ODB. Le champ unitaire externe $F_1$ est hébergé par une unité informatique constituée par un terminal client tel qu'un PDA, un micro-ordinateur portable, un terminal de téléphonie mobile ou autre par exemple.

La description du système de base de données constituant la base de données ODB représentée en figure 4 ne préjuge en aucun cas de la constitution de l'unité informatique hébergeant le champ de données unitaires $F_1$ externe à la base de données ODB représentée sur cette figure.

Ainsi que représenté sur la figure précitée, on indique que le système de base de données objet de l'invention comprend au moins une base de données et des ressources de calcul et de mémorisation de données. Les ressources de calcul 1 comprennent de manière classique une unité centrale CPU, une mémoire de travail RAM et une unité de mémorisation à disque dur 2 par exemple, permettant de mémoriser notamment le ou les champs de données unitaires internes $F_2$ de manière connue en tant que telle.

En outre, le système de base de données objet de l'invention comprend, de manière classique, un système d'entrée sortie I/O portant la référence 3 et permettant l'interconnexion de la base de données ODB constituant un serveur avec tout client ou tout terminal client, à la requête de ces derniers. Le module de calcul 1 ne sera pas décrit en détail car il correspond à un module de type classique de même que l'unité de disque dur et, bien entendu, le module d'entrée sortie 3.

Selon un aspect particulièrement remarquable du système de base de données objet de l'invention, celui-ci comporte en outre un ensemble de règles de transformation, les règles R {f} et R {f}, lesquelles sont mémorisées en mémoire permanente des ressources de mémorisation de données, cet ensemble de règles de transformation mémorisées en mémoire permanente étant noté $M_{01}$ sur la figure 4.

On comprend, en particulier, qu'à titre d'exemple non limitatif, la mémoire permanente précitée peut être constituée par une mémoire programmable non volatile permettant non seulement d'ajouter des règles de transformation, c'est-à-dire des couples de fonctions f et f ainsi que décrit précédemment dans la description, mais également de corriger et/ou programmer ces dernières le cas échéant.

Les ressources de calcul comprennent sur réception de la donnée a' contenue dans le champ unitaire $F_1$ externe à la base de données par exemple, ou le cas échéant, sur réception de l'ensemble des données $\Sigma$a obtenues

dans le cas où la modification locale intervient sur les données mémorisées dans le champ unitaire $F_2$ de la base de données ODB représentée en figure 4, un module de calcul exécutable noté $M_{02}$ permettant d'appliquer l'ensemble de règles de transformation R {f}, R {f}, à la valeur de la donnée transmise pour engendrer, à partir de la valeur de la donnée transmise précitée, la valeur a' selon la figure 1 a ou la valeur a selon la figure 1 b, à partir également de la valeur contenue dans le champ unitaire apparié de la base de données, la base de donnée ODB représentée en figure 4, et de l'ensemble de règles précitées une valeur apparente pertinente pour la base de données. Bien entendu, il s'agit de la valeur apparente pertinente b' calculée à l'étape B de la figure 1a.

En outre, les ressources de calcul comprennent un module de calcul exécutable noté $M_{03}$ permettant de calculer à partir de l'ensemble de règles de transformation de la valeur de la donnée transmise et de la valeur apparente pertinente pour la base de données ODB représentée en figure 4, une valeur apparente pertinente pour le champ unitaire $F_1$ externe à la base de données précitée. Le module de calcul $M_{03}$ correspond à la mise en oeuvre de l'étape de calcul C de la figure 1 a.

Ainsi que représenté en outre en figure 4, les ressources de calcul comprennent un module exécutable $M_{04}$ de vérification d'identité de la valeur de la donnée transmise a' et de la valeur apparente pertinente pour le champ unitaire externe F1 à la base de données ODB représenté en figure 4. Le module exécutable précité met en oeuvre l'étape de test D de la figure 1a.

Enfin, les ressources de calcul comprennent un module exécutable $M_{05}$ d'arrêt du processus de synchronisation asymétrique et d'affectation au champ unitaire de la base de données ODB, c'est-à-dire au champ $F_2$, de la valeur apparente pertinente pour la base de données considérée ODB. Cette opération correspond à l'étape $E_1$ de la figure 1 a. Dans ces conditions, les données contenues dans les deux champs unitaires respectifs $F_1$ et $F_2$ sont synchronisées asymétriquement, conformément au mode opératoire du système de base de données objet de la présente invention.

Enfin, sur réponse négative du module exécutable de vérification d'identité, c'est-à-dire du module $M_{04}$ précédemment décrit, les ressources de calcul comprennent en outre un module exécutable $M_{06}$ de transmission de la base de données ODB vers l'unité informatique hébergeant le champ de données unitaires $F_1$ externe à la base de données ODB de la valeur apparente pertinente pour le champs unitaire externe à la base de données précitée. Ce module de transmission porte la référence $M_{06}$ sur la figure 4 et correspond à la mise en oeuvre de l'étape $E_2$ de la figure 1a.

On comprend bien entendu que le module exécutable de transmission $M_{06}$ fait appel non seulement à l'unité centrale CPU mais également au dispositif d'entrée sortie I/O portant la référence 3 sur la figure 4.

Enfin, ainsi qu'on l'a représenté en outre en figure 4, en particulier sur modification de la valeur de la donnée contenue dans le champ unitaire de données $F_2$ interne à la base de données ODB, les ressources de calcul comportent en outre un module exécutable noté $M_{07}$ de transmission vers l'unité informatique hébergeant le champ de données unitaire F1 externe à la base de données ODB d'un message de requête de transmission de la donnée contenue dans le champ unitaire externe à la base de données, c'est-à-dire la donnée a contenue dans le champ F1 ou, le cas échéant, l'ensemble des données contenues dans la base de données constituant le système informatique hébergeant le champ $F_1$, c'est-à-dire l'ensemble des données Σa conformément à la représentation donnée sur la figure 1 b.

Sur la figure 4 on a représenté les modules de calcul directement exécutables par les modules $M_{02}$ à $M_{07}$ de manière non limitative. On comprend en particulier que ces modules directement exécutables, peuvent être mémorisés au départ dans toute mémoire de type ROM par exemple, puis chargés et compilés en mémoire programmable par exemple, et appelés pour exécution par l'unité centrale CPU, la mémoire de travail RAM servant uniquement à calculer les données et à mémoriser les résultats intermédiaires de calcul pour l'application des règles par exemple. Une telle architecture est susceptible d'améliorer la rapidité d'exécution du système de base de données objet de l'invention tel que représenté en figure 4, en particulier lorsque différents couples de fonction f et f sont mis en oeuvre, ainsi que par exemple pour assurer la présélection de numéros téléphoniques ainsi que décrit précédemment dans la description, le cas échéant pour passer sur un terminal PDA d'un alphabet de type ASCII à un alphabet accentué ou autre par exemple, de manière non limitative.

## Revendications

1. Procédé de synchronisation asymétrique de données contenues dans deux champs unitaires d'une base de données respectivement d'une autre base de données, **caractérisé en ce que**, un appariement desdits deux champs unitaires ayant été préalablement exécuté, celui-ci consiste au moins à :

    a) - transmettre de la dite base de données vers la dite autre base de données la valeur de la donnée contenue dans le champ unitaire de cette base de données ; et au niveau de ladite autre base de données,
    b) - appliquer un ensemble de règles de transformation à la valeur de la donnée transmise, pour engendrer à partir de ladite valeur de la donnée transmise, de la valeur contenue dans le champ unitaire apparié de l'autre base de données et dudit ensemble de règles, une valeur apparente pertinente pour ladite autre base de données ;

c) - calculer à partir de l'ensemble de règles de transformation, de la valeur de la donnée transmise et de la valeur apparente pertinente pour ladite autre base de données une valeur apparente pertinente pour ladite base de données ;

d) - soumettre à un test de vérification d'identité la valeur de la donnée transmise et la valeur apparente pertinente pour ladite base de données ; et,

• sur réponse positive audit test de vérification d'identité,

e1) •- suspendre le processus de synchronisation asymétrique, et affecter audit champ unitaire de ladite autre base de données ladite valeur apparente pertinente pour ladite autre base de données, les données contenues dans les deux champs unitaires respectifs étant synchronisées asymétriquement ;

• sinon,

e2) •- transmettre, de ladite autre base de données à ladite base de données, la valeur apparente pertinente pour cette base de données, et au niveau de la base de données,

f) - mettre à jour le champ unitaire de cette base de données à partir de la valeur apparente pertinente pour ladite base de données, les données contenues dans les deux champs unitaires respectifs étant synchronisés asymétriquement.

2. Procédé selon la revendication 1, **caractérisé en ce que** ladite base de données est formée par la base de données d'un terminal client utilisateur.

3. Procédé selon la revendication 1 ou 2, **caractérisé en ce que** ladite autre base de données est formée par la base de données d'un centre serveur.

4. Procédé selon l'une des revendications 1 à 3, **caractérisé en ce que** l'étape a) consistant à transmettre est exécutée automatiquement sur modification locale de la donnée contenue dans le champ unitaire de ladite première base de données.

5. Procédé selon l'une des revendications 1 à 4, **caractérisé en ce que**, sur modification locale de la donnée contenue dans le champ unitaire de ladite autre base de données, celui-ci consiste au moins, préalablement à l'étape a) consistant à transmettre de la dite base de données vers ladite autre base de données, à

o) transmettre, de ladite autre base de données vers ladite base de données, une requête d'appel de transmission selon l'étape a).

6. Procédé selon l'une des revendications 1 à 5, **caractérisé en ce que** ledit ensemble de règles comporte un ensemble de couples de fonctions, chaque couple de fonctions comportant au moins :

- une première fonction de calcul de ladite valeur apparente pertinente pour ladite autre base de données et une deuxième fonction de calcul de la valeur apparente pertinente pour ladite base de données ;
- un jeu de contraintes de stabilité, appliquées à la première et à la deuxième fonction, permettant de garantir un nombre maximum d'échanges de synchronisation entre ladite base de données et ladite autre base de données.

7. Procédé selon la revendication 6, **caractérisé en ce que**, pour une première fonction f et une deuxième fonction f constituant un couple de fonctions, ledit jeu de contraintes vérifie la relation :

$$f(f'(f(a,b),a),f(a,b)) = f(a,b)$$

$$f'(f(a,b),f'(f(a,b),a)) = f'(f(a,b),a)$$

a et b désignant toute valeur numérique contenue dans le champ unitaire de la base de données respectivement dans le champ unitaire de l'autre base de données ;

f(a,b) désignant la valeur apparente pertinente pour ladite autre base de données ;

f'(f(a,b),a) désignant la valeur apparente pertinente pour ladite base de données.

**8.** Procédé selon la revendication 7, **caractérisé en ce que** pour réaliser une synchronisation asymétrique constituant une application à une adaptation des numéros d'appel téléphonique à la présélection téléphonique, la valeur apparente pertinente pour ladite autre base de données est donnée par :

- si b=∅, alors f(a,0) =a, 0 désignant l'ensemble vide ; sinon
- si b≠∅, alors f(a,b)= le premier numéro de a, tous les autres numéros de b ; et la valeur apparente pertinente pour ladite base de données est donnée par :
- si a = ∅, alors f(b,∅)=0 et les numéros suivants de b sauf le premier ; sinon,

si a ≠ ∅, alors f(b,a)=0 et les numéros suivants de b, ce qui permet, de garantir d'une part l'existence du chiffre 0 au début des numéros de ladite base de données, valeur apparente pertinente pour ladite base de données calculée à partir de la deuxième fonction f, et, d'autre part, le choix par le client utilisateur du premier chiffre premier numéro de l'autre base de données, valeur apparente pertinente pour l'autre base de données calculée à partir de la première fonction f.

**9.** Système de base de données comportant au moins une base de données, des moyens de calcul et de mémorisation des données, lesdits moyens de calcul comportant au moins une fonction d'appariement d'un champ de données unitaire interne à ladite base de données avec un champ de données unitaire externe à ladite base de données, hébergé par une unité informatique, **caractérisé en ce que** ledit système de base de données comporte en outre :

- un ensemble de règles de transformation de données numériques, mémorisé en mémoire permanente des moyens de mémorisation de données ; lesdits moyens de calcul comportant, sur réception de la donnée contenue dans le champ unitaire externe de ladite base de données ;
- un module de calcul exécutable permettant d'appliquer ledit ensemble de règles de transformation à la valeur de la donnée transmise, pour engendrer à partir de ladite valeur de la donnée transmise, de la valeur contenue dans le champ unitaire apparié de cette base de données et dudit ensemble de règles une valeur apparente pertinente pour ladite base de données ;
- un module de calcul exécutable permettant de calculer à partir de l'ensemble de règles de transformation, de la valeur de la donnée transmise et de la valeur apparente pertinente pour ladite base de données une valeur apparente pertinente pour ledit champ unitaire externe à ladite base de données ;
- un module exécutable de vérification d'identité de la valeur de la donnée transmise et de la valeur apparente pertinente, pour ledit champ unitaire externe à ladite base de données ; et, sur réponse positive dudit module exécutable de vérification d'identité ;
- un module exécutable d'arrêt du processus de synchronisation asymétrique et d'affectation audit champ unitaire de ladite base de données de ladite valeur apparente pertinente pour ladite base de données, les données contenues dans les deux champs unitaires respectifs étant synchronisées asymétriquement.

**10.** Système de base de données, selon la revendication 9, **caractérisé en ce que**, sur réponse négative dudit module exécutable de vérification d'identité, lesdits moyens de calcul comportent en outre un module exécutable de transmission de cette base de données vers ladite unité informatique hébergeant ledit champ de données unitaire externe à cette base de données de ladite valeur apparente pertinente pour ledit champ unitaire externe à ladite base de données.

**11.** Système de base de données selon la revendication 9, **caractérisé en ce que** sur modification de la valeur de la donnée contenue dans ledit champ de données unitaire interne à ladite base de données, ladite unité de calcul comporte en outre un module exécutable de transmission, vers l'unité informatique hébergeant ledit champ de données unitaire externe à ladite base de données, d'un message de requête de transmission de la donnée contenue dans ledit champ unitaire externe à ladite base de données.

**12.** Programme d'ordinateur mémorisé sur un support de mémorisation et exécutable par un ordinateur, pour l'exécution d'une fonction de synchronisation asymétrique entre un champ unitaire interne à une base de données et un champ unitaire externe à cette base de données, hébergé par une unité informatique, lesdits deux champs unitaires étant appariés, **caractérisé en ce qu'**il comporte un ensemble de règles organisées selon un ensemble de couples de fonctions, chaque couple de fonctions comportant au moins :

- une première fonction de calcul d'une valeur apparente pertinente pour ladite base de données et une deuxième fonction de calcul de la valeur apparente pertinente pour ledit champ unitaire externe à ladite base de données ;
- un jeu de contraintes de stabilité appliquées à la première et à la deuxième fonction et permettant de garantir un nombre maximum d'échanges entre ledit champ unitaire interne et ledit champ unitaire externe à ladite base de données.

DB     ODB
$F_1$     $F_2$
a     b

$a \longrightarrow a'$

$DB \xrightarrow{T(a')} ODB$

A    DB

$a',b \xrightarrow{R\{f\}} b'$

Mise à jour $b \longrightarrow b'$

B

$a',b' \xrightarrow{R\{f'\}} a''$

C

D

$a''=a'\,?$

$-$    $+$

$ODB \xrightarrow{T(a'')} DB$

$E_2$

Fin
$b=b'= AS(a',b)$

$E_1$

ODB

Fin.
Mise à jour
$a'=a''=AS(b',a')$

F    DB

## FIG.1a

**_FIG.1b_**

**_FIG.2a_**

*a'*

DB

Client

*a'*

*b'*

ODB

Serveur

*f() f'()*

R{f}
R{f'}

## FIG.2b

*a'*

DB

Client

*a'*

a"=f'(b',a')

*b'*

ODB

Serveur

*f() f'()*

R{f}
R{f'}

## FIG.2c

**_FIG.2d_**

**_FIG.3a_**

*a*

DB

Client

*a*

$b''=f(a,b')$

$b'=b''$

ODB

*f()f'()*

Serveur

R{f}
R{f'}

## FIG.3b

*a*

DB

Client

*a*

$a'=f'(b'',a')$

$b''$

ODB

*f()f'()*

Serveur

R{f}
R{f'}

## FIG.3c

$a=a'$

$b''$

Client

$a'$

$a'=f'(b'',a)$

DB

Serveur

ODB

$f()\ f'()$

$R\{f\}$
$R\{f'\}$

**FIG.3d**

**FIG.4**

Office européen
des brevets

**RAPPORT DE RECHERCHE EUROPEENNE**

Numéro de la demande

EP 05 29 1964

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2002/133508 A1 (LARUE CHRIS ET AL) 19 septembre 2002 (2002-09-19) * alinéas [0064], [0067], [0131], [0146], [0147], [0153], [0156], [0157], [0190], [0194], [0202] * * figure 2A * | 1-12 | G06F17/30 |
| X | US 5 806 074 A (SOUDER ET AL) 8 septembre 1998 (1998-09-08) * colonne 2, ligne 60,61 * * colonne 3, ligne 55 - colonne 4, ligne 1 * * colonne 5, ligne 6-8 * * colonne 8, ligne 34,35 * * colonne 9, ligne 41-67 * * colonne 12, ligne 10-35 * | 1-4,6,7, 9,10,12 | |
| A | NOVELL: "DirXML Administration Guide" DIRXML 1.0 DOCUMENTATION, novembre 2000 (2000-11), XP002309370 PROVO, UT, USA * pages 1-15 * * pages 42-53 * | 1-12 | |

DOMAINES TECHNIQUES
RECHERCHES (IPC)

G06F

Le présent rapport a été établi pour toutes les revendications

| Lieu de la recherche | Date d'achèvement de la recherche | Examinateur |
|---|---|---|
| La Haye | 2 décembre 2005 | Bykowski, A |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 29 1964

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-12-2005

| Document brevet cité au rapport de recherche | Date de publication | Membre(s) de la famille de brevet(s) | Date de publication |
|---|---|---|---|
| US 2002133508 A1 | 19-09-2002 | US 6401104 B1 | 04-06-2002 |
| US 5806074 A | 08-09-1998 | AU 2335397 A<br>CA 2249422 A1<br>GB 2326495 A<br>US 6058401 A<br>WO 9735270 A1 | 10-10-1997<br>25-09-1997<br>23-12-1998<br>02-05-2000<br>25-09-1997 |

EPO FORM P0460

Pour tout renseignement concernant cette annexe : voir Journal Officiel de l'Office européen des brevets, No.12/82